(19) Europäisches Patentamt
European Patent Office
Office européen des brevets

(11) **EP 1 960 934 B1**

(12) **FASCICULE DE BREVET EUROPEEN**

(45) Date de publication et mention
de la délivrance du brevet:
**21.03.2012   Bulletin 2012/12**

(51) Int Cl.:
***G06F 21/00*** *(2006.01)*

(21) Numéro de dépôt: **06847029.3**

(86) Numéro de dépôt international:
**PCT/EP2006/069623**

(22) Date de dépôt: **12.12.2006**

(87) Numéro de publication internationale:
**WO 2007/068706 (21.06.2007 Gazette 2007/25)**

(54) **PROCEDE POUR SECURISER L'EXECUTION D'UN CODE LOGICIEL EN LANGAGE INTERMEDIAIRE DANS UN APPAREIL PORTATIF**

VERFAHREN ZUR SICHERUNG DER AUSFÜHRUNG EINES VERMITTELNDEN SPRACHSOFTWARECODES BEI EINER TRAGBAREN ANWENDUNG

METHOD FOR MAKING SECURE EXECUTION OF AN INTERMEDIATE LANGUAGE SOFTWARE CODE IN A PORTABLE APPLIANCE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **13.12.2005   FR 0512627**

(43) Date de publication de la demande:
**27.08.2008   Bulletin 2008/35**

(73) Titulaire: **Gemalto SA**
**92190 Meudon (FR)**

(72) Inventeurs:
- **GIRARD, Pierre**
**F-13112 La Destrousse (FR)**
- **GONZALVO, Benoît**
**F-13420 Gemenos (FR)**

(56) Documents cités:
**US-A1- 2004 186 979**

**Description**

La présente invention concerne les logiciels et environnements d'exécution embarqués dans un appareil numérique portatif et, en particulier, concerne un procédé pour sécuriser l'exécution d'une application compilée en langage intermédiaire face aux attaques par faute, lors de son exécution sur un appareil numérique portatif muni d'une machine virtuelle d'exécution.

Un appareil portatif désignera par la suite tout appareil numérique portatif tel qu'un ordinateur portable mais aussi tout appareil doté d'un microcontrôleur réunissant un processeur et des mémoires, tel qu'une carte à puce.

La volonté de créer des applications inter opérables a conduit au développement des langages intermédiaires de programmation. Le but principal de ces langages est ainsi de rendre leurs logiciels indépendants du matériel sur lequel ils doivent être exécutés. Les logiciels sont alors prévus pour s'exécuter sous la forme d'un code intermédiaire indépendant de l'architecture sous-jacente.

Les programmeurs sont ainsi globalement dégagés des contraintes liées à des matériels spécifiques. Les langages intermédiaires tels que le pseudo-code Java (désigné par bytecode en langue anglaise), obtenu après compilation du langage source Java, ont ainsi connu un essor conséquent. On peut également citer le langage intermédiaire MSIL (acronyme anglo-saxon pour « Microsoft intermediate langage ») déployé dans le cadre de l'environnement .Net ou DotNet (marque déposée), obtenu après compilation de divers langages sources possibles tels que C++ ou C#.

Le code intermédiaire correspond donc classiquement à une forme compilée du logiciel. Ces logiciels, compilés en Java, ou dans d'autres langages intermédiaires, tels que .Net, ne peuvent pas être exécutés tel quels par le processeur de l'appareil sur lequel on désire exécuter un programme compilé sous forme de code intermédiaire. Il est nécessaire d'introduire une couche logicielle ayant pour principale fonction d'interpréter le code intermédiaire en instructions exécutables par le processeur de l'appareil hôte. Cette couche logicielle est appelée « machine virtuelle ». Par exemple, la machine virtuelle JAVA permet l'exécution d'un logiciel Java sur une plate-forme donnée sur laquelle elle est implémentée.

Un logiciel Java est classiquement diffusé sous forme d'un ensemble de modules constitué de fichiers .class, correspondant à une forme compilée du logiciel. Chaque fichier compilé correspond à une structure de données de type classe et comprend en tant que telle les informations de cette classe : à savoir, la description des éléments de la classe (ses constantes, ses champs, ses méthodes), la description des éléments utilisés par la classe et définis dans d'autres classes (des champs et des méthodes), le code des méthodes de la classe sous forme d'instructions interprétables (pseudo-code) par l'interpréteur de la machine virtuelle Java.

De manière simplifiée, un fichier .class présente par exemple la structure suivante :

```
ClassFile {
Field_list ; //Description des champs de la
classe
Method_list ; //Méthodes de cette classe
(incluant leur pseudo-code, c'est-à-dire leurs
instructions interprétables par l'interpréteur de la
machine virtuelle)
    }
Ainsi, à titre d'exemple, dans le cadre d'une
application Java de porte monnaie électronique, on peut
définir une classe nommée « Purse », avec son champ
« balance » et sa méthode «decrementBalance() ». Le
fichier .class pourrait présenter la structure
suivante :
Public class Purse {
private int balance = 0 ;
public void decrementBalance() {
    this.balance = this.balance - 1;
    }
}
```

Ainsi, selon cet exemple, l'exécution de la méthode de la classe « Purse » consiste à retirer la valeur 1 à l'instance courante du champ balance.

L'exécution du logiciel Java correspondant est réalisée par la machine virtuelle Java installée sur l'appareil portatif.

Cette machine virtuelle transforme les informations du ClassFile en des structures de données en mémoire de travail qui sont propres à la machine virtuelle et qui permettent à cette machine virtuelle d'interpréter et d'exécuter le logiciel.

Pour ce faire, la machine virtuelle dispose d'un jeu d'instructions propre, chaque instruction étant codée sur un ou plusieurs octets. Le jeu d'instructions de la machine virtuelle comporte par exemple un certain nombre d'instructions classiques comme les opérations arithmétiques, logiques et les sauts. La machine virtuelle dispose typiquement d'une pile d'exécution, utilisant des variables locales numérotées à partir de zéro, mais peut aussi utiliser des registres.

A l'heure actuelle, l'exécution d'une application par la machine virtuelle n'est pas entièrement sécurisée, notamment vis-à-vis des attaques en général et, en particulier, des attaques par faute. Ainsi, la valeur sensible dans l'exemple ci-dessus, représentée par le champ « balance », peut être modifiée suite à l'injection d'une faute lors de la manipulation de cette valeur pour l'interprétation de la méthode de mise à jour de ce champ par la machine virtuelle, conduisant à fixer une valeur finale dans la pile pour le champ balance différente de celle normalement attendue, par exemple le champ balance peut être forcé à sa valeur maximale.

Une façon connue de protéger les applications en code intermédiaire contre les attaques par faute lors de leur exécution par la machine virtuelle sur la carte, consiste à ajouter un code redondant de contrôle au sein même du code de l'application devant être exécutée.

Par exemple, pour protéger le code précédent, il est possible d'utiliser en Java, en tant que donnée de contrôle (« checksum » en langue anglaise), la valeur complémentée du champ balance, notée ~balance, qui renvoie le complément à 1 de la valeur binaire de balance, et de mettre à jour cette valeur de donnée de contrôle en parallèle avec la mise à jour de la valeur balance lors de l'exécution de la méthode par la machine virtuelle. La comparaison du résultat des deux calculs de mise à jour menés en parallèle, d'une part pour le champ balance et, d'autre part, le champ complémenté ~balance, permet alors de vérifier l'intégrité des données qui ont servi à établir les calculs. Le code java modifié en conséquence présente alors la structure suivante :

```
public class Purse {
private int balance = 0 ;
private int balChecsum = ~balance; // = 0xFFFFFFFF
public void decrementBalance() {
    this.balance = this.balance - 1;
    this.balChecsum = this.balChecsum + 1;
    }
  }
```

L'inconvénient d'une telle méthode de sécurisation de l'exécution du code Java est qu'elle est très consommatrice de ressources et de temps de calcul, ce qui est pénalisant dans les environnements contraints tels que les cartes à puce.

En outre, les développeurs d'applications Java (ou autre langage intermédiaire) doivent alors développer le code de leur application en tenant compte de cette contrainte pour eux afin de protéger les parties sensibles du code.

L'invention vise à résoudre un ou plusieurs de ces inconvénients. L'invention a ainsi pour objet un procédé d'exécution d'une application compilée en code intermédiaire sur un appareil numérique portatif muni d'une machine virtuelle d'exécution pour l'interprétation du code intermédiaire, caractérisé en ce qu'il comprend une étape d'application d'un mode d'exécution sécurisé dans lequel l'interprétation du code intermédiaire par la machine virtuelle comprend les étapes suivantes :

- pour chaque donnée du code manipulée pour l'exécution d'une opération arithmétique et/ou logique définie par le code, générer une donnée de contrôle liée à ladite donnée du code par l'intermédiaire d'une fonction prédéterminée,
- en parallèle de l'exécution de ladite opération, exécuter une opération de contrôle, l'operation de contrôle étant liée à ladite opération définie par le code par l'intermédiaire de ladite fonction prédéterminée et l'operation de contrôle agissant sur la ou les données de contrôle.

De préférence, le procédé comprend en outre une étape consistant à :

- vérifier l'intégrité des calculs effectués en comparant les résultats obtenus par lesdites opérations.

Avantageusement, l'étape de vérification consiste à vérifier que les résultats obtenus par lesdites opérations, respectivement l'opération définies par le code et l'opération de contrôle, sont liés par la fonction prédéterminée.

Selon un premier mode de réalisation, le procédé comprend l'utilisation par la machine virtuelle de deux structures de données indépendantes manipulable par ladite machine virtuelle, respectivement une structure de données dédiée à la manipulation de la ou des données du code pour l'exécution de l'opération définie par le code et une structure de données dédiée à la manipulation de la ou des données de contrôle correspondantes pour l'exécution de l'opération de contrôle correspondante.

De préférence, les structures de données utilisées par la machine virtuelle selon ce premier mode de réalisation sont organisées en pile.

Dans une variante, les structures de données utilisées par la machine virtuelle selon ce premier mode de réalisation sont organisées en registres.

Selon un second mode de réalisation, le procédé comprend l'utilisation par la machine virtuelle d'une structure de données unique pour la manipulation d'une part, de la ou des données du code pour l'exécution de l'opération définie par le code et, d'autre part, de la ou des données de contrôle correspondantes pour l'exécution de l'opération de contrôle correspondante.

De préférence, la structure de donnée unique utilisée par la machine virtuelle selon ce second mode de réalisation est organisé en pile.

Avantageusement, la fonction prédéterminée utilisée définit un morphisme de groupe.

De préférence, le mode d'exécution sécurisé est appliqué, continuellement.

Selon une variante, le mode d'exécution sécurisé est appliqué de façon aléatoire.

Selon une autre variante, le mode d'exécution sécurisé est appliqué sur détection d'une condition particulière. De préférence, la condition d'application du mode d'exécution sécurisé est fonction de l'interprétation d'une partie du code.

Selon un mode de réalisation, l'appareil numérique est une carte à puce embarquant une machine virtuelle du type Java ou DotNet.

L'invention concerne encore une machine virtuelle d'exécution d'une application compilée en code intermédiaire sur un appareil numérique portatif, caractérisé en ce qu'elle est susceptible d'être stockée dans une mémoire non volatile de l'appareil et susceptible de mettre en oeuvre le procédé tel qu'il vient d'être décrit.

L'invention concerne aussi un appareil numérique portatif comprenant une mémoire non volatile mémorisant la machine virtuelle selon l'invention.

Selon un mode de réalisation, cet appareil est une carte à puce.

D'autres particularités et avantages de l'invention apparaîtront clairement à la lecture de la description faite à titre d'exemple non limitatif et en regard du dessin annexé sur lequel :

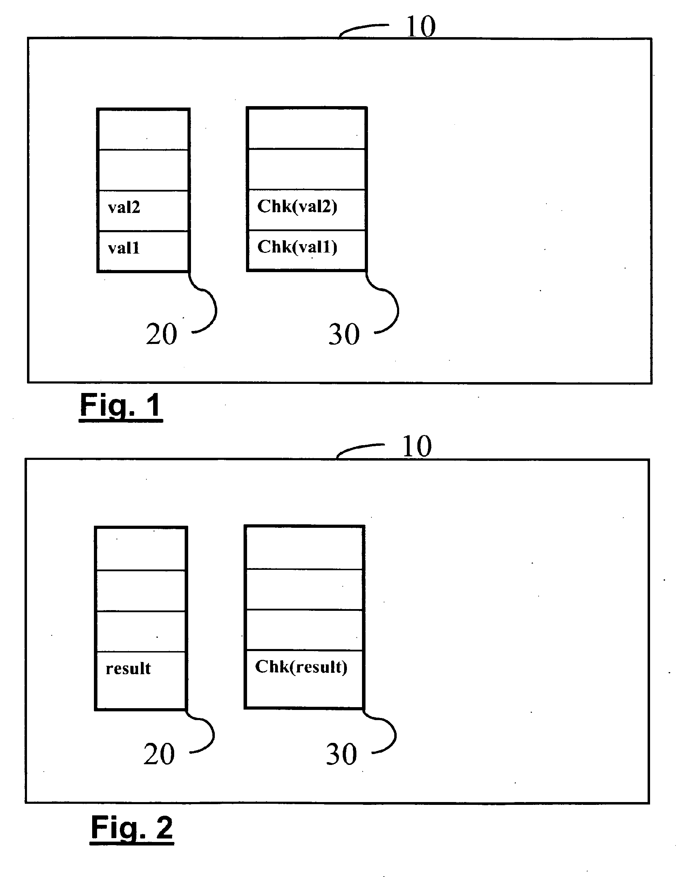

- les figures 1 et 2 illustrent un mode de réalisation préféré de l'invention pour l'exécution en mode sécurisé d'une application en code intermédiaire.

L'invention propose donc de sécuriser l'exécution d'une application compilée en code intermédiaire sur un appareil numérique portatif muni d'une machine virtuelle d'exécution pour l'interprétation du code de l'application.

Selon un premier mode de réalisation, le procédé de sécurisation selon l'invention est implémenté sur un appareil numérique, par exemple une carte à puce 10, sur lequel est installée une machine virtuelle à pile. La pile d'exécution 20 de la machine virtuelle est formée d'une structure de donnée par l'intermédiaire de laquelle les données du code intermédiaire de l'application peuvent être manipulées par la machine virtuelle.

Le principe de l'invention consiste alors à ajouter à la machine virtuelle à pile classique, une pile de sécurité 30, reproduisant en parallèle les calculs effectués sur la pile normale d'exécution pour assurer un contrôle de l'intégrité des opérations se déroulant sur la pile normale d'exécution. Ainsi, selon l'invention, tout code agissant sur une donnée considérée comme sensible doit générer une action à la fois sur la pile d'exécution normale et sur la pile de sécurité.

Pour ce faire, l'interprétation du code intermédiaire de l'application par la machine virtuelle nécessite d'être modifiée pour propager les opérations définies par le code sur la pile normale et sur la pile de sécurité. Toutefois, selon une caractéristique de l'invention, les données manipulées par l'intermédiaire de la pile de sécurité pour l'exécution d'une opération définie par le code en parallèle de l'exécution de cette opération sur la pile normale d'exécution, ne sont pas les données du code à l'identique de celle traitées sur la pile normale.

Plus précisément, chaque fois qu'une donnée, notée val, est placée sur la pile normale d'exécution, une donnée correspondante de contrôle, notée Chk (val), est générée et est ajoutée sur la pile de sécurité. La donnée Chk (val) est prévue pour être liée à la donnée val par l'intermédiaire d'une fonction prédéterminée Chk. Par ailleurs, chaque fois qu'une opération arithmétique et/ou logique est exécutée en utilisant la donnée du code val sur la pile d'exécution, une opération correspondante de contrôle est exécutée sur la pile de sécurité en utilisant la donnée Chk (val).

L'intérêt de la pile de sécurité pour la machine virtuelle est alors de pouvoir contrôler à tout instant l'intégrité de la ou des données val qu'elle manipule sur la pile d'exécution normale au cours de l'exécution d'une opération sensible, en vérifiant que si la donnée val est placée sur la pile d'exécution, alors la donnée de contrôle correspondante Chk(val) est placée sur la pile de sécurité.

Pour ce faire, les données du code et les données de contrôle correspondantes sont donc liées entre elles par l'intermédiaire d'une fonction de contrôle prédéterminée, dotée de propriétés mathématiques particulières comme expliquées ci-après.

Ainsi, soit V l'espace de valeurs sur des registres de longueur s. Pour des registres de longueur 32 bits, on a :

$$V= [-2147483648, \ 2147483647] = [-2^{31}, \ 2^{31}-1]$$

Soit O l'ensemble V, avec les opérations logiques et arithmétiques classiques suivantes (+,-,\*,/,&,l).

Soit F l'ensemble V avec l'ensemble d'opérations symbolisées de la manière suivantes (,⊙,♦,□,O).

La fonction de contrôle Chk selon l'invention peut alors être décrite de la manière suivante:

Chk : O - - - - - - - - - - -→ F, de telle sorte que pour toute opération op dans l'ensemble (+, -,\*,/,&,|), il existe une opération correspondante cop dans l'ensemble (,,⊙,♦,□,O) telle que: .

Chk ( a op b) = Chk(a) cop Chk(b)

Par exemple, dans le cadre du langage java, la fonction - précédemment décrite du complément à 1 peut être écrite comme un cas particulier de la fonction Chk de la façon suivante :

$$\sim: \ (V, \ (+,-,*,/,\&,|)) \ ----------\to \ (V, \ (\divideontimes \boxtimes \odot \blacklozenge \square O))$$

$$a \ | ------------------\to \ \sim a$$

avec

$$\sim(a + b) = \sim a \ \divideontimes \ \sim b \ = \ \sim a + \sim b + 1$$

$$\sim(a - b) = \sim a \ \boxtimes \ \sim b \ = \ \sim a - \sim b - 1$$

Mathématiquement, la fonction de contrôle Chk peut être définie comme un morphisme de groupe de l'espace O vers l'espace F, respectant l'ensemble des opérations dans F.

Ainsi, on peut voir que pour toute opération logique ou arithmétique agissant sur une ou des données dans l'espace V, qui est l'espace arithmétique classique des machines virtuelle actuelles, il est possible de trouver un calcul équivalent en utilisant la fonction Chk telle que définie, utilisant un opérateur cop lié à l'opérateur op mis en oeuvre dans le premier calcul par l'intermédiaire de la fonction Chk, et agissant sur une ou des données dites de contrôle, liées aux données utilisées dans le premier calcul par l'intermédiaire de la fonction Chk.

La figure 1 illustre un exemple d'exécution d'un code intermédiaire donné sur la pile d'exécution normale et sur la pile de sécurité selon les principes exposés ci-dessus.

Soit l'opération arithmétique définie par le code intermédiaire consistant à ajouter deux entiers vall et val2 préalablement placés dans la pile normale 20. Les données de contrôle correspondantes Chk(vall) et Chk(val2) sont alors générées pour être placées dans la pile de sécurité 30. Les données val1 et val2 sont ensuite dépilées de la pile d'exécution normale 20 pour l'exécution de l'opération arithmétique + définie par le code, tandis que les données de contrôle correspondantes Chk(vall) et Chk(val2) sont dépilées de la pile de sécurité 30 pour l'exécution en parallèle de l'opération correspondante à l'opération + définie par le code, liée à cette dernière par l'intermédiaire de la fonction Chk.

Comme illustré à la figure 2, le résultat result = val1 + val2 est alors placé sur la pile normale, tandis que le résultat Chk (result) de l'opération arithmétique de contrôle correspondante est placé sur la pile de sécurité.

Si on reprend l'exemple précédent dans le cadre du langage java, où la fonction de contrôle Chk peut être définie par la fonction ~, le résultat de contrôle Chk(result) vaut ~vall + ~val2 + 1.

De la même manière, si une opération de soustraction est jouée par la machine virtuelle, alors l'opération correspondante est jouée sur la pile de sécurité. Ainsi, si l'opération arithmétique définie par le code intermédiaire consiste à soustraire les deux entiers val1 et val2 préalablement placés dans la pile normale 20, l'opération arithmétique de contrôle correspondante est exécutée en parallèle sur la pile de sécurité 30 en agissant sur les données de contrôle ~val1 et ~val2 et le résultat de contrôle Chk (result) de l'opération arithmétique de contrôle correspondante placé sur la pile de sécurité vaut ~val1 - ~val2 - 1.

Le principe de l'invention s'applique au comportement de tout code intermédiaire traitant d'opérations arithmétiques et/ou logiques.

Ainsi, en vérifiant la correspondance des résultats sur la pile d'exécution normale et sur la pile de sécurité, qui doivent normalement être liés entre eux par l'application de la fonction de contrôle prédéfinie Chk, il est possible de vérifier l'intégrité des calculs effectués.

L'étape de vérification de l'intégrité peut être mise en oeuvre de façon optionnelle. Ainsi, on peut la différer, l'effectuer à des instants prédéfinis ou même aléatoirement.

D'autres modes de réalisation que celui décrit en référence aux figures 1 et 2 avec l'utilisation de deux piles indépendantes par la machine virtuelle sont envisageables. Ainsi, selon une variante, la machine virtuelle n'utilise qu'une seule pile et les informations du code intermédiaire et leurs informations de contrôle correspondantes définies par l'intermédiaire de la fonction prédéfinie Chk sont empilées alternativement.

L'invention peut également être implémentée dans le cadre d'une machine virtuelle à registres. Dans ce cas, chaque registre de la machine virtuelle utilisée pour stocker les informations du code intermédiaire est doublé d'un registre de sécurité dédié au stockage des informations de contrôle correspondantes définies à partir des informations du code par l'intermédiaire de la fonction prédéfinie Chk.

Avantageusement, la machine virtuelle est susceptible de fonctionner selon un mode classique ou selon un mode sécurisé où, comme décrit précédemment, les calculs et manipulations de données sont doublés par des calculs et manipulations en parallèle sur des données de contrôle.

Selon une première variante, on peut prévoir un fonctionnement de la machine virtuelle uniquement en mode sécurisé.

Selon une autre variante, le passage en mode sécurisé peut être appliqué seulement sur demande du développeur de l'application, par exemple en utilisant une API spécifique.

Selon une autre variante, le passage en mode sécurisé peut être réalisé de façon aléatoire. Par exemple, on décide que 30% du temps de fonctionnement doit être en mode sécurisé et la répartition est aléatoire.

Enfin, le passage en mode sécurisé peut s'effectuer sur détection d'une condition ou d'un événement particulier, par exemple pour l'exécution d'une méthode d'une classe particulière, pour la lecture d'un champs particulier, etc.

**Revendications**

1. Procédé d'exécution d'une application compilée en code intermédiaire sur un appareil numérique portatif (10) muni d'une machine virtuelle d'exécution pour l'interprétation du code intermédiaire, **caractérisé en ce qu'**il comprend une étape d'application d'un mode d'exécution sécurisé dans lequel l'interprétation du code intermédiaire par la machine virtuelle comprend les étapes suivantes :

   - pour chaque donnée (val1, val2) du code manipulée pour l'exécution d'une opération arithmétique et/ou logique définie par le code, générer une donnée de contrôle (Chk (val1), Chk(val2)) liée à ladite donnée du code par l'intermédiaire d'une fonction prédéterminée,
   - en parallèle de l'exécution de ladite opération, exécuter une opération de contrôle étant liée à ladite opération définie par le code par l'intermédiaire de ladite fonction prédéterminée et l'opération de contrôle agissant sur la ou les données de contrôle.

2. Procédé selon la revendication 1, **caractérisé en ce qu'**il comprend en outre une étape consistant à

   - vérifier l'intégrité des calculs effectués en comparant les résultats (result, Chk (result)) obtenus par lesdites opérations.

3. Procédé selon la revendication 2, **caractérisé en ce que** l'étape de vérification consiste à vérifier que les résultats obtenus par lesdites opérations, respectivement l'opération définies par le code et l'opération de contrôle, sont liés par la fonction prédéterminée.

4. Procédé selon la revendication 1, 2 ou 3, **caractérisé en ce qu'**il comprend l'utilisation par la machine virtuelle de deux structures de données (20, 30) indépendantes manipulable par ladite machine virtuelle, respectivement une structure de données (20) dédiée à la manipulation de la ou des données du code pour l'exécution de l'opération définie par le code et une structure de données (30) dédiée à la manipulation de la ou des données de contrôle correspondantes pour l'exécution de l'opération de contrôle correspondante.

5. Procédé selon la revendication 4, **caractérisé en ce que** les structures de données (20, 30) utilisées par la machine virtuelle sont organisées en pile.

6. Procédé selon la revendication 4, **caractérisé en ce que** les structures de données utilisées par la machine virtuelle sont organisées en registres.

7. Procédé selon la revendication 1, 2 ou 3, **caractérisé en ce qu'**il comprend l'utilisation par la machine virtuelle d'une structure de données unique pour la manipulation d'une part, de la ou des données du code pour l'exécution de l'opération définie par le code et, d'autre part, de la ou des données de contrôle correspondantes pour l'exécution de l'opération de contrôle correspondante.

8. Procédé selon la revendication 7, **caractérisé en ce que** la structure de donnée unique utilisée par la machine virtuelle est organisée en pile.

9. Procédé selon l'une quelconque des revendications précédentes, **caractérisé en ce que** la fonction prédéterminée utilisée définit un morphisme de groupe.

10. Procédé selon l'une quelconque des revendications précédentes, **caractérisé en ce que** le mode d'exécution sécurisé est appliqué continuellement.

11. Procédé selon l'une quelconque des revendications 1 à 9, **caractérisé en ce que** le mode d'exécution sécurisé est appliqué de façon aléatoire.

12. Procédé selon l'une quelconque des revendications 1 à 9, **caractérisé en ce que** le mode d'exécution sécurisé est appliqué sur détection d'une condition particulière.

13. Procédé selon la revendication 12, **caractérisé en ce que** la condition d'application du mode d'exécution sécurisé est fonction de l'interprétation d'une partie du code.

14. Procédé selon l'une quelconque des revendications précédentes, **caractérisé en ce que** l'appareil numérique est une carte à puce (10) embarquant une machine virtuelle du type Java ou DotNet.

15. Machine virtuelle d'exécution d'une application compilée en code intermédiaire sur un appareil numérique portatif, **caractérisé en ce qu'**elle est susceptible d'être stockée dans une mémoire non volatile de l'appareil et susceptible de mettre en oeuvre le procédé selon l'une quelconque des revendications précédentes.

16. Appareil numérique portatif comprenant une mémoire non volatile mémorisant la machine virtuelle selon la revendication 15.

17. Appareil selon la revendication 16, **caractérisé en ce que** cet appareil est une carte à puce (10).

**Claims**

1. Method for executing an application compiled in intermediate code on a portable digital device (10) equipped with a virtual executing machine for interpreting the intermediate code, **characterised in that** it comprises a step of applying a secure execution mode in which the interpretation of the intermediate code by the virtual machine comprises the following steps:

   - for each data item (val1, val2) of the code manipulated for the execution of an arithmetic and/or logical operation defined by the code, generating a checksum data item (Chk (val1), Chk (val2)) which is linked to said data item of the code via a predetermined function,
   - in parallel with the execution of said operation, executing a checksum operation which is linked to said operation defined by the code via said predetermined function and which acts on the checksum data item (s).

2. Method according to claim 1, **characterised in that** it furthermore comprises a step consisting in

   - verifying the integrity of the calculations carried out by comparing the results (result, Chk(result)) obtained by said operations.

3. Method according to claim 2, **characterised in that** the verification step consists in verifying that the results obtained by said operations, respectively the operation defined by the code and the checksum operation, are linked by the predetermined function.

**4.** Method according to claim 1, 2 or 3, **characterised in that** it comprises the use by the virtual machine of two independent data structures (20, 30) which can be manipulated by said virtual machine, respectively a data structure (20) dedicated to the manipulation of the data item(s) of the code for the execution of the operation defined by the code and a data structure (30) dedicated to the manipulation of the corresponding checksum data item(s) for the execution of the corresponding checksum operation.

**5.** Method according to claim 4, **characterised in that** the data structures (20, 30) used by the virtual machine are organised as a stack.

**6.** Method according to claim 4, **characterised in that** the data structures used by the virtual machine are organised as registers.

**7.** Method according to claim 1, 2 or 3, **characterised in that** it comprises the use by the virtual machine of a single data structure for the manipulation, on the one hand, of the data item(s) of the code for the execution of the operation defined by the code and, on the other hand, of the corresponding checksum data item(s) for the execution of the corresponding checksum operation.

**8.** Method according to claim 7, **characterised in that** the single data structure used by the virtual machine is organised as a stack.

**9.** Method according to any one of the preceding claims, **characterised in that** the predetermined function used defines a group morphism.

**10.** Method according to any one of the preceding claims, **characterised in that** the secure execution mode is applied continually.

**11.** Method according to any one of claims 1 to 9, **characterised in that** the secure execution mode is applied randomly.

**12.** Method according to any one of claims 1 to 9, **characterised in that** the secure execution mode is applied upon detection of a particular condition.

**13.** Method according to claim 12, **characterised in that** the condition for application of the secure execution mode is a function of the interpretation of part of the code.

**14.** Method according to any one of the preceding claims, **characterised in that** the digital device is a chip card (10) which incorporates a virtual machine of the Java or DotNet type.

**15.** Virtual machine for executing an application compiled in intermediate code on a portable digital device, **characterised in that** it can be stored in a non-volatile memory of the device and is able to implement the method according to any one of the preceding claims.

**16.** Portable digital device comprising a non-volatile memory which stores the virtual machine according to claim 15.

**17.** Device according to claim 16, **characterised in that** this device is a chip card (10).

**Patentansprüche**

**1.** Ausführungsverfahren einer kompilierten Anwendung im Vermittlercode auf ein tragbares digitales G e r ä t (10), d a s mit einer virtuellen Ausführungsmaschine für die Interpretation des Vermittlercodes ausgerüstet ist, **dadurch gekennzeichnet, dass** es eine Anwendungsstufe eines gesicherten Ausführungsmodus umfasst, in dem die Interpretation des Zwischencodes durch die virtuelle Maschine die folgenden Stufen umfasst:

  - für jede Größe (val1, val2) des Codes, die für die Ausführung einer arithmetischen und / oder logischen Operation, die vom Code definiert wird, gehandhabt wird, eine Kontrollgröße generieren (Chk (val1), Chk (val2), die mit der genannten Größe des Codes über eine vorbestimmte Funktion verbunden ist,
  - parallel zur Ausführung der genannten Operation eine Kontrolloperation ausführen, wobei die Kontrolloperation mit der genannten Operation verbunden ist, die durch den Code über die genannte vorbestimmte Funktion definiert wird und wobei die Kontrolloperation auf die Kontrollgröße oder Kontrollgrößen einwirkt.

2. Verfahren gemäß Anspruch 1, **dadurch gekennzeichnet, dass** es darüber hinaus eine Stufe umfasst, die besteht in

- der Überprüfung der Integrität der Berechnungen, die durch den Vergleich der Ergebnisse (result, Chk (result)) durchgeführt wurden, die durch die genannten Operationen erhalten wurden.

3. Verfahren gemäß Anspruch 2, **dadurch gekennzeichnet, dass** die Überprüfungsstufe in der Überprüfung besteht, dass die von den genannten Operationen erhaltenen Ergebnisse bzw. die Operation, die durch den Code und die Kontrolloperation definiert wird, durch die vorbestimmte Funktion verbunden sind.

4. Verfahren gemäß Anspruch 1, 2 oder 3, **dadurch gekennzeichnet, dass** es die Verwendung von zwei unabhängigen, durch die genannte virtuelle Maschine handhabbare Größenstrukturen (20, 30) bzw. eine Größenstruktur (20), die für die Handhabung der Größe oder der Größen des Codes für die Ausführung der durch den Code definierten Operation und eine Größenstruktur (30) umfasst, die für die Handhabung der entsprechenden Kontrollgröße oder Kontrollgrößen für die Ausführung der entsprechenden Kontrolloperation dediziert ist.

5. Verfahren gemäß Anspruch 4, **dadurch gekennzeichnet, dass** die Größenstrukturen (20, 30), die von der virtuellen Maschine verwendet werden, als Stapel organisiert sind.

6. Verfahren gemäß Anspruch 4, **dadurch gekennzeichnet, dass** die Größenstrukturen, die von der virtuellen Maschine verwendet werden, als Register organisiert sind.

7. Verfahren gemäß Anspruch 1, 2 oder 3, **dadurch gekennzeichnet, dass** es die Verwendung einer einzigartigen Größenstruktur durch die virtuelle Maschine einerseits für die Handhabung der Größe oder der Größen des Codes für die Ausführung der durch den Code definierten Operation und andererseits die Kontrollgröße oder die Kontrollgrößen für die Ausführung der entsprechenden Kontrolloperation umfasst.

8. Verfahren gemäß Anspruch 7, **dadurch gekennzeichnet, dass** die einzigartige Größenstruktur, die von der virtuellen Maschine verwendet wird, als Stapel organisiert ist.

9. Verfahren gemäß einem der vorhergehenden Ansprüche, **dadurch gekennzeichnet, dass** die verwendete vorbestimmte Funktion einen Gruppenmorphismus definiert.

10. Verfahren gemäß einem der vorhergehenden Ansprüche, **dadurch gekennzeichnet, dass** der gesicherte Ausführungsmodus kontinuierlich angewendet wird.

11. Verfahren gemäß Anspruch 1 bis 9, **dadurch gekennzeichnet, dass** der gesicherte Ausführungsmodus zufällig angewendet wird.

12. Verfahren gemäß Anspruch 1 bis 9, **dadurch gekennzeichnet, dass** der gesicherte Ausführungsmodus bei Erfassung einer besonderen Bedingung angewendet wird.

13. Verfahren gemäß Anspruch 12, **dadurch gekennzeichnet, dass** die Anwendungsbedingung des gesicherten Ausführungsmodus von der Interpretation eines Teils des Codes abhängig ist.

14. Verfahren gemäß einem der vorhergehenden Ansprüche, **dadurch gekennzeichnet, dass** das digitale Gerät eine Chipkarte (10) ist, die eine virtuelle Maschine vom Typ Java oder DotNet integriert.

15. Virtuelle Ausführungsmaschine eine kompilierten Anwendung im Vermittlercode auf ein tragbares digitales Gerät, **dadurch gekennzeichnet, dass** sie geeignet ist, in einem nicht flüchtigen Speicher des Geräts gespeichert zu werden und geeignet ist, das Verfahren gemäß einem der vorhergehenden Ansprüche umzusetzen.

16. Tragbares digitales Gerät mit einem nicht flüchtigen Speicher, der die virtuelle Maschine gemäß Anspruch 15 speichert.

17. Gerät gemäß Anspruch 16, **dadurch gekennzeichnet, dass** dieses Gerät eine Chipkarte (10) ist.

Fig. 1

Fig. 2